# EUROPÄISCHE PATENTSCHRIFT

(11) **EP 1 903 976 B1**
(45) Veröffentlichungstag und Bekanntmachung des Hinweises auf die Patenterteilung: **29.09.2010**
(21) Anmeldenummer: 06754371.0
(22) Anmeldetag: 14.06.2006
(51) Int. Cl.: A61C 5/06

(54) **VERFAHREN UND VORRICHTUNG ZUM ERZEUGEN EINER MEHRKOMPONENTENMASSE**
METHOD AND DEVICE FOR PRODUCING A MULTICOMPONENT COMPOUND
PROCEDE ET DISPOSITIF PERMETTANT DE REALISER UNE MASSE A PLUSIEURS CONSTITUANTS

(30) Priorität: 15.07.2005 DE 102005033260
(43) Veröffentlichungstag der Anmeldung: 02.04.2008
(73) Patentinhaber: Ernst Mühlbauer GmbH & Co.KG, 25870 Norderfriedrichskoog (DE)
(72) Erfinder: MEYER, Sven, 21641 Apensen (DE); WEIHRAUCH, Matthias, 25336 Klein Nordende (DE)
(74) Vertreter: Glawe, Delfs, Moll
(86) Internationale Anmeldenummer: PCT/EP2006/005737
(87) Internationale Veröffentlichungsnummer: WO 2007/009538

(56) Entgegenhaltungen:
- EP-A- 1 279 379
- DE-A1- 19 951 504
- US-B1- 6 371 336
- US-B1- 6 682 601

## Beschreibung

Die Erfindung betrifft ein Verfahren zum Erzeugen einer Mehrkomponentenmasse, insbesondere für Dentalzwecke, durch Auspressen ihrer Komponenten aus Kartuschen mit Hilfe von Kolben, von denen jeder mit einem eigenen Antrieb versehen ist, und durch Mischen der Komponenten. Die Erfindung betrifft weiter eine Vorrichtung zum Ausführen des Verfahrens.

Bei der Herstellung von Mehrkomponentenmassen, insbesondere für Dentalzwecke, treten verschiedene Probleme auf. Einerseits müssen die Komponenten in genau dem richtigen Mischungsverhältnis in einen Mischer gepresst werden, wo sie vermischt werden und dann austreten können. Sollen die beiden Komponenten in gleichen Mengen verwendet werden, so könnten als Kartuschen Zylinder mit gleichen Durchmessern verwendet werden, wobei dann auch die Kolben mit gleicher Geschwindigkeit vorwärts bewegt werden, um die Komponenten auszupressen. Dies kann mit Hilfe eines einzigen Antriebs geschehen. Mit einer solchen Vorrichtung könnten auch Komponenten in einem anderen Verhältnis ausgepresst werden, wenn die Kartuschen bzw. Zylinder unterschiedliche Durchmesser haben. Eine bessere Anpassung an verschiedene Mischungsverhältnisse erhält man aber, wenn jeder der Kolben mit einem eigenen Antrieb versehen ist

(DE 199 51 504 A1). Auf diese Weise kann das gewünschte Mischungsverhältnis erhalten werden, wenn die Kartuschen tatsächlich gefüllt sind bzw. die Kolben an den Komponenten anliegen, so dass dort keine Lufttasche vorhanden ist. Wenn in einer der Kartuschen eine solche Lufttasche vorhanden ist, so würde natürlich, wenn beide Antriebe in Betrieb gesetzt werden, zunächst nur aus einer Kartusche Material ausgetrieben werden, während in der anderen Kartusche zunächst die Luft komprimiert würde und entweicht, so dass kein Material oder auf jeden Fall viel zu wenig Material austritt. Es müsste also zunächst einmal von Hand sichergestellt werden, dass im vom Kolben abgeschlossenen Zylinderraum sich keine Luft mehr befindet, sondern nur noch die Komponente. Dies ist aber zeitaufwendig und kompliziert.

Dokument US 6 371 336 B1 offenbart eine Vorrichtung zum Erzeugen einer Mehrkomponentenmasse mit Hilfe eines verwindungssteifen Rahmens. Dokument EP 1 279 379 A1 offenbart ein Verfahren und eine Vorrichtung zum Erzeugen einer Mehrkomponentenmasse, wobei das Außpreßverhalten durch Sensoren bestimmt werden kann.

Die Aufgabe der Erfindung besteht in der Schaffung eines Verfahrens und einer Vorrichtung zum Erzeugen einer Mehrkomponentenmasse, mit der diese Masse schnell und im richtigen Mischungsverhältnis zu erhalten ist.

Die erfindungsgemäße Lösung besteht darin, dass beim Auspressbetrieb der Lastzustand der Antriebe bestimmt wird, und
- wenn für alle Antriebe der Lastzustand festgestellt wird, die Vorschubgeschwindigkeiten auf vorbestimmte konstante Werte geregelt werden,
- wenn nur für einige Antriebe der Lastzustand festgestellt wird, diese Antriebe angehalten werden, während die übrigen Antriebe mit höherer Vorschubgeschwindigkeit betrieben werden, bis auch bei ihnen jeweils der Lastzustand festgestellt wird, und dann angehalten werden, und dass anschließend für alle Antriebe die Vorschubgeschwindigkeiten auf vorbestimmte konstante Werte geregelt werden,
- wenn für keinen der Antriebe der Lastzustand festgestellt wird, die Antriebe mit höherer Vorschubgeschwindigkeit betrieben werden, bis bei ihnen jeweils der Lastzustand festgestellt wird, und dann angehalten werden, und dass anschließend für alle Antriebe die Vorschubgeschwindigkeiten auf vorbestimmte konstante Werte geregelt werden.

Der einfachste Betriebsfall ist, dass für alle Antriebe der Lastzustand festgestellt wird, also überall die Kolben bereits an den Komponenten ohne irgendwelche Lufttaschen anliegen. In diesem Falle können die Vorschubgeschwindigkeiten auf vorbestimmte konstante Werte geregelt werden, damit die Komponenten im richtigen Verhältnis gleichmäßig ausgetrieben und in den Mischer verbracht werden.

Wenn nur für einige Antriebe der Lastzustand festgestellt wird, andere Kolben sich also leicht bewegen lassen, so sind dort offenbar noch Lufttaschen vorhanden. In diesem Falle werden die Antriebe der Kolben, für die der Lastzustand festgestellt wird, angehalten. Die übrigen Antriebe werden dann solange betätigt, bis dort ebenfalls Lastzustand festgestellt wird. Anschließend kann dann für alle Antriebe die Vorschubgeschwindigkeit auf vorbestimmte konstante Werte geregelt werden. Auf diese Weise ist wiederum sichergestellt, dass das Material gleichmäßig und im richtigen Verhältnis ausgetrieben wird. Die Erfindung erschöpft sich aber nicht darin, vielmehr erfolgt der Antrieb der Kolben, so lang kein Lastzustand festgestellt wird (also noch eine Lufttasche vorhanden ist) mit höheren Vorschubgeschwindigkeiten. Man erreicht so schneller den Zustand, wo das Auspressen der Komponenten beginnt. Dies spart Zeit.

Wird für keinen der Antriebe der Lastzustand festgestellt, so werden alle Antriebe mit höherer Vorschubgeschwindigkeit betrieben, bis jeweils der Lastzustand festgestellt wird. Auf diese Weise wird wieder sehr schnell der Zustand eingestellt, von dem ab dann das Auspressen im richtigen Verhältnis erfolgen kann. Ist dann für alle Antriebe der Lastzustand festgestellt, so kann wieder das normale Auspressen mit konstanten Vorschubgeschwindigkeiten beginnen.

Durch die Erfindung wird also einerseits sichergestellt, dass immer die Komponenten im richtigen Mischungsverhältnis ausgetrieben werden. Außerdem wird der Gesamtvorgang bei nur teilweiser gefüllten Kartuschen beschleunigt.

Der Lastzustand der Antriebe wird vorteilhafterweise mit Hilfe der Stromaufnahme der Antriebe bestimmt.

Bei einer anderen vorteilhaften Ausführungsform erfolgt die Bestimmung des Lastzustands mit mechanischen Mitteln. Zu diesem Zweck ist der Kolben mit einer Antriebsstange über eine Feder verbunden. Diese Feder wird in dem Moment zusammengedrückt, wo der Kolben das Material erreicht. Das Zusammendrücken der Feder kann dann außerhalb der Kartuschen einer vorteilhaften Ausführungsform dadurch festgestellt werden, dass die Kolbenstange durch die Antriebsstange nach außen ragt, so dass außerhalb der Kartusche festgestellt werden kann, dass die Kolbenstange sich nicht mehr oder nur noch sehr wenig bewegt, obwohl die Antriebstange noch angetrieben wird. Diese relative Verschiebung kann zum Beispiel durch einen Mikroschalter oder durch eine Lichtschranke festgestellt werden.

Diese Ausführungsform hat folgenden weiteren Vorteil. Das Ausbringen des Materials erfolgt am Anfang nicht mit der vollen Kraft und Geschwindigkeit, da ja zunächst die Feder noch nachgibt. Diese "Softstart" hat den Vorteil, dass das Ausbringen nicht schlagartig und gleich mit voller Kraft beginnt, was zu einer zumindestens am Anfang ungleichförmigen Mischung führen könnte.

Dieser "Softstart" kann bei einer anderen vorteilhaften Ausführungsform dadurch erreicht werden war, dass der Kolben bei Feststellung des Lastzustands zunächst ein kleines Stück zurückgefahren wird, bevor er mit dem Vorschub beginnt.

Wenn bei Erreichen der Entleerungsposition eines Kolben in mindestens einer Kartusche die Antriebe umgesteuert und mit höherer Geschwindigkeit betrieben werden, so werden die Kolben, wenn mindestens eine der Kartuschen entleert ist, schnell in die Stellung zurückgefahren, in der dann die Kartuschen ausgewechselt werden können. Auch dies erhöht die Geschwindigkeit, mit der gearbeitet werden kann.

Die Vorschubgeschwindigkeit hat je nach Material unterschiedliche optimale Werte. Die Vorschubgeschwindigkeit sollte daher entsprechend eingestellt werden. Bei einer vorteilhaften Ausführungsform erfolgt dies automatisch, indem die Regelung der Vorschubgeschwindigkeit auf konstante Werte in Abhängigkeit vom Auspressverhalten der Komponenten erfolgt, das mit gespeicherten oder berechneten Werten für bekannte Materialien verglichen wird. Diese Maßnahme (EP 1 297 379 A1) verhindert Bedienungsfehler und vereinfacht die Bedienung. Das Auspressverhalten kann dabei auf unterschiedlichen Weisen festgestellt werden, z. B. durch den für den Antrieb erforderlichen Strom, durch Deformierung der Kartusche usw.

Eine erfindungsgemäße Vorrichtung zur Durchführung des Verfahrens zeichnet sich dadurch aus, dass sie aufweist:
- Kartuschen für jeweils eine Komponente für eine Mehrkomponentenmasse, insbesondere für Dentalzwecke, die mit jeweils einem Kolben und einem Antrieb zum Auspressen der Komponente versehen sind,
- Einrichtungen zum Bestimmen der Lastzustände der Antriebe und zum Regeln der Vorschubgeschwindigkeiten, und
- einen Mischer für die aus den Kartuschen ausgepressten Komponenten.

Wird eine Vorrichtung zum Erzeugen einer Mehrkomponentenmasse mit einem dynamischen Mischer verwendet, so kann vorgesehen werden, dass der Antrieb für den Mischer erst eingeschaltet wird, wenn für einen oder mehrere Kolben der Lastzustand festgestellt wird.

Die Erfindung wird im Folgenden anhand einer vorteilhaften Ausführungsform unter Bezugnahme auf die beigefügte Zeichnungen beschrieben, die schematisch vorteilhafte Ausführungsformen der Vorrichtung der Erfindung zeigen. Es zeigen:
Fig. 1 schematisch den Aufbau der erfindungsgemäße Vorrichtung; und
Fig. 2 eine Teilansicht einer anderen vorteilhaften Ausführungsform.

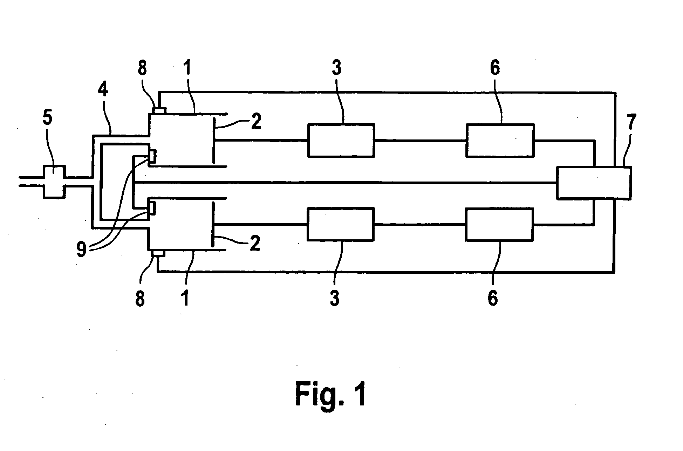

Die in Fig. 1 schematisch dargestellte Vorrichtung weist zwei Kartuschen oder Zylinder 1 auf, in denen sich jeweils eine Komponente befindet. In diesen Zylindern 1 sind Kolben 2 angeordnet, die über Antriebe 3 in die Zylinder 1 hineingedrückt werden, um das Material über Leitungen 4 in einen Mischer 5 zu fördern, wo die Komponenten vermischt werden und dann anschließend aus dem Mischer 5 austreten. Die Antriebe 3 werden über Einheiten 6 angetrieben, mit denen auch der Stromverbrauch der Antriebe 3 gemessen wird. Durch eine Steuerung 7 werden dabei die Vorschubgeschwindigkeiten der Kolben 2 so eingestellt, dass sie bei gefüllten Zylindern 1 konstante Werte einnehmen. Sind ein oder mehrerer der Zylinder 1 nur teilweise gefüllt, so wird die Vorschubgeschwindigkeit des entsprechenden Kolbens 2 erhöht, bis Lufttaschen beseitigt sind und der eigentliche Auspressvorgang beginnen kann. Das Auspressverhalten kann z. B. über Drucksensoren 8 festgestellt werden, die den Druck oder die Verformung der Zylinder 1 feststellen. Diese Signale können dann mit in der Einheit 7 berechneten oder gespeicherten Werten verglichen werden, um festzustellen, welche Komponenten sich in den Zylindern 1 befinden, um die für diese Komponenten optimalen Vorschubgeschwindigkeiten einzustellen. Bei 9 sind noch Einrichtungen angedeutet, mit denen die Entleerungspositionen der Kolben festgestellt werden können, damit die Kolben 2 mit erhöhter Geschwindigkeit zurückbewegt werden können, damit die Kartuschen 1 ausgewechselt werden können. Durch entsprechende Steuerung mit der Einheit 7 kann auch ein sogenannter "Softstart" durchgeführt werden. Wenn der erhöhte Lastzustand eines Kolbens festgestellt wird (beziehungsweise beider Kolben), wird dieser Kolben erst ein wenig zurückgefahren und erst dann mit dem Auspressen begonnen. Der Vorteil ist, dass das Auspressen nicht schlagartig beginnt, was in der Anfangsphase ein schlechtes Mischungsverhältnis bedeuten könnte.

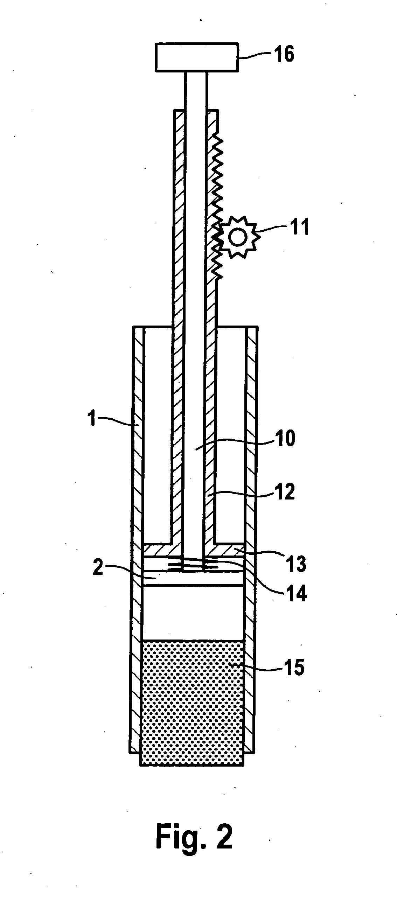

In Fig. 2 ist schematisch eine andere Ausführungsform dargestellt, und zwar nur eine Kartusche 1 mit einem Kolben 2, obwohl die erfindungsgemäße Vorrichtung selbstverständlich mehrere solcher Kartuschen 1 und Kolben 2 aufweist. Der Antrieb erfolgt hier nicht auf die Kolbenstange 10, sondern über ein mit einem nicht gezeigten Antrieb verbundenes Zahnrad 11 auf eine Antriebsstange 12, die im oberen Teil zahnstangenartig ausgebildet ist. In dieser Antriebsstange 12 ist die Kolbenstange 10 angeordnet und axial verschiebbar geführt. Zwischen einer unteren Erweiterung 13 der Stange und dem Kolben 2 befindet sich eine Druckfeder 14. Wird die Antriebsstange 12 durch das Antriebszahnrad 11 nach unten bewegt und erreicht der Kolben 2 das Material 15, so wird die Feder 14 zusammengedrückt. Die relative Verschiebung zwischen Antriebsstange 12 und Kolbenstange 10 kann dann durch eine Messeinrichtung 16 festgestellt werden, die außerhalb der Kartusche 1 angeordnet ist. Diese Messeinrichtung 16 kann eine Lichtschranke oder ein Mikroschalter sein. Aufgrund der Wirkung der Feder 14 kann so nicht nur der Lastzustand festgestellt werden. Es wird vielmehr auch ein "Softstart" erreicht, indem nicht gleich die volle Kraft auf das Material 15 wirkt.

## Patentansprüche

1. Verfahren zum Erzeugen einer Mehrkomponentenmasse, insbesondere für Dentalzwecke, durch Auspressen ihrer Komponenten aus Kartuschen (1) mit Hilfe von Kolben (2), von denen jeder mit einem eigenen Antrieb (3) versehen ist, und durch Mischen der Komponenten, **dadurch gekennzeichnet, dass** beim Auspressbetrieb der Lastzustand der Antriebe (3) bestimmt wird, und
- wenn für alle Antriebe (3) der Lastzustand festgestellt wird, die Vorschubgeschwindigkeiten auf vorbestimmte konstante Werte geregelt werden,
- wenn nur für einige Antriebe (3) der Lastzustand festgestellt wird, diese Antriebe (3) angehalten werden, während die übrigen Antriebe (3) mit höheren Vorschubgeschwindigkeiten betrieben werden, bis auch bei ihnen jeweils der Lastzustand festgestellt wird, und dann angehalten werden, und dass anschließend für alle Antriebe (3) die Vorschubgeschwindigkeiten auf vorbestimmte konstante Werte geregelt werden,
- wenn für keinen der Antriebe (3) der Lastzustand festgestellt wird, die Antriebe (3) mit höheren Vorschubgeschwindigkeiten betrieben werden, bis bei ihnen jeweils der Lastzustand festgestellt wird, und dann angehalten werden, und dass anschließend für alle Antriebe (3) die Vorschubgeschwindigkeiten auf vorbestimmte konstante Werte geregelt werden.

2. Verfahren nach Anspruch 1, **dadurch gekennzeichnet, dass** der Lastzustand der Antriebe (3) mit Hilfe der Stromaufnahme der Antriebe (3) bestimmt wird.

3. Verfahren nach Anspruch 1, **dadurch gekennzeichnet, dass** der Lastzustand der Antriebe (3) mit mechanischen Mitteln bestimmt wird.

4. Verfahren nach einem der Ansprüche 1 bis 3, **dadurch gekennzeichnet, dass** die Kolben bei Feststellung des Lastzustands um eine kurze Strecke zurückgefahren werden, bevor mit dem Vorschub zum Ausbringen des Materials begonnen wird.

5. Verfahren nach einem der Ansprüche 1 bis 4, **dadurch gekennzeichnet, dass** bei Erreichen der Entleerungsposition eines Kolbens (2) in mindestens einer Kartusche (1) die Antriebe (3) umgesteuert und mit der höheren Geschwindigkeit betrieben werden.

6. Verfahren nach einem der Ansprüche 1 bis 5, **dadurch gekennzeichnet, dass** die Regelung der Vorschubgeschwindigkeiten auf konstante Werte in Abhängigkeit vom Auspressverhalten der Komponenten erfolgt, das mit gespeicherten oder berechneten Werten für bekannte Materialien verglichen wird.

7. Verfahren nach einem der Ansprüche 1 bis 6, bei dem die Komponenten mit einem dynamischen Mischer nach dem Auspressen aus den Kartuschen gemischt werden, **dadurch gekennzeichnet, dass** der Mischer erst von dem Moment an angetrieben wird, zu dem ein oder mehrere Kolben den Lastzustand erreichen.

8. Vorrichtung zur Durchführung des Verfahrens nach einem der Ansprüche 1 bis 7, die aufweist:
- Kartuschen (1) für jeweils eine Komponente für eine Mehrkomponentenmasse, insbesondere für Dentalzwecke, die mit jeweils einem Kolben (2) und einem Antrieb (3) zum Auspressen der Komponente versehen sind,
- einen Mischer (5) für die aus den Kartuschen ausgepressten Komponenten, und
- Einrichtungen (6, 7, 16) zum Bestimmen der Lastzustände der Antriebe (3) und zum Regeln der Vorschubgeschwindigkeiten, **dadurch gekennzeichnet, dass** diese Einrichtungen dazu ausgebildet sind, zuerst alle Antriebe solange,
wie bei ihnen kein Lastzustand festgestellt wird, mit höherer Vorschubgeschwindigkeit zu betreiben und dann anzuhalten, und dann mit auf vorbestimmte konstante Werte geregelter Vorschubgeschwindigkeit zu betreiben.

9. Vorrichtung nach Anspruch 8, **dadurch gekennzeichnet, dass** sie Einrichtungen (9) zum Feststellen der in Entleerungspositionen der Kolben aufweist.

10. Vorrichtung nach Anspruch 8 oder 9, **dadurch gekennzeichnet, dass** die Einrichtungen (6) zum Bestimmen der Lastzustände Strommesseinrichtungen sind.

11. Vorrichtung nach Anspruch 8 oder 9, **dadurch gekennzeichnet, dass** die Einrichtungen (16) zum Bestimmen des Lastzustände Lichtschranken oder Mikroschalter zur Feststellung der mechanischen Stellung der Kolben aufweisen.

12. Vorrichtung nach einem der Ansprüche 8 bis 11, **dadurch gekennzeichnet, dass** die Kolben (2) über jeweils eine Feder (14) mit einer Antriebsstange (12) verbunden sind.

13. Vorrichtung nach einem der Ansprüche 8 bis 12, **dadurch gekennzeichnet, dass** sie Verzögerungsschaltungen aufweist, mit denen die Kolben (2) bei Erreichen des Lastzustands ein wenig zurückgefahren werden, bevor mit dem Auspressen begonnen wird.

14. Vorrichtung nach einem der Ansprüche 8 bis 13, **dadurch gekennzeichnet, dass** sie Einrichtungen (8) zum Feststellen des Auspressverhaltens der Komponenten aufweist.

## Claims

1. Method for producing a multi-component mass, in particular for dental purposes, by pressing the components thereof out of cartridges (1) using pistons (2), each of which is provided with a separate drive (3), and by mixing the components, **characterised in that**, during the pressing-out operation, the load condition of the drives (3) is determined, and
- if the load condition is detected for all the drives (3), the feed rates are adjusted to predetermined constant values,
- if the load condition is detected for only some drives (3), these drives (3) are stopped whilst the remaining drives (3) are driven at higher feed rates until the load condition is also detected for each of them, and are then stopped, and **in that** the feed rates are subsequently adjusted to predetermined constant values for all the drives (3),
- if the load condition is detected for none of the drives (3), the drives (3) are operated at higher feed rates until the load condition is detected for each of them, and are then stopped, and **in that** the feed rates are subsequently adjusted to predetermined constant values for all the drives (3).

2. Method according to claim 1, **characterised in that** the load condition of the drives (3) is determined by means of the electric current consumption of the drives (3).

3. Method according to claim 1, **characterised in that** the load condition of the drives (3) is determined with mechanical means.

4. Method according to any one of claims 1 to 3, **characterised in that**, when the load condition is detected, the pistons are moved back by a short distance before the feed operation for removing the material is begun.

5. Method according to any one of claims 1 to 4, **characterised in that**, when the position for emptying a piston (2) into at least one cartridge (1) is reached, the drives (3) are reversed and operated with the higher rate.

6. Method according to any one of claims 1 to 5, **characterised in that** the adjustment of the feed rates to constant values is carried out in accordance with the pressing-out behaviour of the components which is compared with stored or calculated values for known materials.

7. Method according to any one of claims 1 to 6, wherein the components are mixed with a dynamic mixer after being pressed out of the cartridges, **characterised in that** the mixer is only driven from the time at which one or more pistons reach the load condition.

8. Device for carrying out the method according to any one of claims 1 to 7, which device has:
- cartridges (1) each for a component for a multi-component mass, in particular for dental purposes, which are each provided with a piston (2) and a drive (3) for pressing out the component,
- a mixer (5) for the components pressed out of the cartridges, and
- devices (6, 7, 16) for determining the load conditions of the drives (3) and for adjusting the feed rates, **characterised in that** these devices are constructed to first operate all the drives at a higher feed rate as long as no load condition is detected for them, and then to stop and then to operate them with a feed rate which is adjusted to predetermined constant values.

9. Device according to claim 8, **characterised in that** it has devices (9) for determining the emptying positions of the pistons.

10. Device according to claim 8 or claim 9, **characterised in that** the devices (6) for determining the load conditions are electric current measuring devices.

11. Device according to claim 8 or claim 9, **characterised in that** the devices (16) for determining the load conditions have photoelectric sensors or microswitches for determining the mechanical position of the pistons.

12. Device according to any one of claims 8 to 11, **characterised in that** the pistons (2) are each connected to a drive rod (12) by means of a spring (14).

13. Device according to any one of claims 8 to 12, **characterised in that** it has time-delay switches by means of which the pistons (2) are moved back by a short distance when the load condition is reached, before the pressing-out operation is begun.

14. Device according to any one of claims 8 to 13, **characterised in that** it has devices (8) for determining the pressing-out behaviour of the components.

## Revendications

1. Procédé de production d'une masse à plusieurs composants, en particulier à des fins dentaires, par pressage de ses composants hors de cartouches (1) à l'aide de pistons (2), chacun étant doté d'un propre entraînement (3), et par mélange des composants, **caractérisé en ce que** lors de l'action de pressage, l'état de charge des entraînements (3) est déterminé, et
- lorsque pour tous les entraînements (3), l'état de charge est établi, les vitesses d'avancement sont ajustées à des valeurs constantes prédéterminées,
- lorsque l'état de charge n'est établi que pour quelques entraînements (3), ces entraînements (3) sont arrêtés alors que les entraînements restants (3) sont actionnés à une vitesse d'avancement supérieure jusqu'à ce que pour ceux-ci également, l'état de charge soit déterminé respectivement, et ensuite, arrêtés, et que ensuite pour tous les entraînements (3), les vitesses d'avancement soient ajustées à des valeurs constantes prédéterminées,
- lorsque l'état de charge n'est établi pour aucun des entraînements (3), les entraînements (3) sont actionnés avec des vitesses d'avancement supérieures jusqu'à ce que pour ceux-ci également, l'état de charge soit établi et ensuite arrêtés et qu'ensuite, pour tous les entraînements (3), les vitesses d'avancement soient ajustées à des constantes prédéterminées.

2. Procédé selon la revendication 1, **caractérisé en ce que** l'état de charge des entraînements (3) est déterminé à l'aide de la consommation de courant des entraînements (3).

3. Procédé selon la revendication 1, **caractérisé en ce que** l'état de charge des entraînements (3) est déterminé avec des moyens mécaniques.

4. Procédé selon l'une des revendications 1 à 3, **caractérisé en ce que** les pistons sont reculés sur un court trajet lors de l'établissement de l'état de charge avant de commencer l'avancement permettant d'exprimer le matériau.

5. Procédé selon l'une des revendications 1 à 4, **caractérisé en ce que** lorsqu'un piston (2) a atteint la position de vidage dans au moins une cartouche (1), les entraînements (3) sont redirigés et actionnés à la vitesse supérieure.

6. Procédé selon l'une des revendications 1 à 5, **caractérisé en ce que** la régulation des vitesses d'avancement s'effectue à des valeurs constantes en fonction du comportement de pressage des composants qui est comparé aux valeurs enregistrées ou calculées pour des matériaux connus.

7. Procédé selon l'une des revendications 1 à 6, dans lequel les composants sont mélangés avec un mélangeur dynamique après le pressage hors des cartouches, **caractérisé en ce que** le mélangeur n'est actionné qu'à partir du moment où un ou plusieurs pistons atteignent l'état de charge.

8. Dispositif de réalisation du procédé selon l'une des revendications 1 à 7, qui présente :
- des cartouches (1) pour respectivement un composant pour une masse à plusieurs composants, en particulier à des fins dentaires, qui sont dotées respectivement d'un piston (2) et d'un entraînement (3) pour exprimer les composants,
- un mélangeur (5) pour les composants exprimés des la cartouches, et
- des appareils (6, 7, 16) pour déterminer les états de charge des entraînements (3) et pour régler les vitesses d'avancement, **caractérisés en ce que** ces appareils sont conçus pour actionner tout d'abord tous les entraînements à la vitesse supérieure tant que pour ceux-ci, aucun état de charge n'est établi et pour les arrêter et ensuite, les actionner avec une vitesse d'avancement ajustée sur des valeurs constantes prédéterminées.

9. Dispositif selon la revendication 8, **caractérisé en ce qu'**ils présentent des appareils (9) pour déterminer les positions de vidage des pistons.

10. Dispositif selon la revendication 8 ou 9, **caractérisé en ce que** les appareils (6) pour déterminer les états de charge sont des appareils de mesure du courant.

11. Dispositif selon la revendication 8 ou 9, **caractérisé en ce que** les appareils (16) de détermination des états de charge présentent des barrières lumineuses ou des micro-contacts pour déterminer la position mécanique des pistons.

12. Dispositif selon l'une des revendications 8 à 11, **caractérisé en ce que** les pistons (2) sont reliés respectivement par un ressort (14) avec une bielle de commande (12).

13. Dispositif selon l'une des revendications 8 à 12, **caractérisé en ce qu'**il présente des commutateurs retard avec lesquels les pistons (2) sont un peu retirés lorsque l'état de charge est obtenu, avant de commencer le pressage.

14. Dispositif selon l'une des revendications 8 à 13, **caractérisé en ce qu'**il présente des appareils (8) de détermination du comportement de pressage des composants.
